# EUROPEAN PATENT APPLICATION

(11) **EP 4 671 317 A1**
(43) Date of publication of application: **31.12.2025**
(21) Application number: 25765941.7
(22) Date of filing: 20.01.2025
(51) Int. Cl.: C08J 11/08, B29B 17/02, B29B 17/04, B09B 3/32, B09B 3/80, B09B 3/35, B29B 17/00

(54) **METHOD FOR PREPARING RECYCLED POLYMER**

(30) Priority: 04.03.2024 KR 20240030461; 15.01.2025 KR 20250006126
(71) Applicant: LG Chem, Ltd., Seoul 07336 (KR); Chungbuk National University Industry-Academic Cooperation Foundation, Cheongju-si, Chungcheongbuk-do 28644 (KR)
(72) Inventor: LIM, Yong Chan, Daejeon 34122 (KR); RYU, Sang Woog, Sejong 30098 (KR); PARK, Jong Suh, Daejeon 34122 (KR); OH, Hyun Taek, Daejeon 34122 (KR); LEE, Sang Ho, Daejeon 34122 (KR); KIM, Jun Sik, Daejeon 34122 (KR); SHIN, Dong Jin, Cheongju-si Chungcheongbuk-do 28665 (KR); GU, Un Gi, Chungcheongbuk-do 28611 (KR)
(74) Representative: Hoffmann Eitle
(86) International application number: PCT/KR2025/001075
(87) International publication number: WO 2025/187952

(57) **Abstract**

Provided is a method for preparing recycled polymers including: (S1) supplying a mixed solvent including a first solvent of C₃₋₈ alkyl acetate and a second solvent of a non-aromatic cyclic hydrocarbon to a dissolution tank and a precipitation tank, respectively; (S2) supplying a composite resin to the dissolution tank, heating to a dissolution temperature, and dissolving a polymer included in the composite resin while maintaining the dissolution tank at the dissolution temperature to obtain a polymer solution; (S3) supplying the polymer solution to the precipitation tank in which the mixed solvent is maintained at a precipitation temperature and precipitating a polymer included in the polymer solution to obtain a solution including a polymer precipitate having a spherical shape; and (S4) compression-filtering the solution including the polymer precipitate having a spherical shape to obtain a polymer precipitate.

## Description

### [Technical Field]

### CROSS-REFERENCE TO RELATED APPLICATIONS

The present application claims the benefit of priorities to Korean Patent Application No. 10-2024-0030461, filed on March 4, 2024, and Korean Patent Application No. 10-2025-0006126, filed on January 15, 2025, the entire contents of which are incorporated herein as a part of the specification.

### Technical Field

The present invention relates to a method for preparing recycled polymers, and more particularly, to a method for preparing recycled polymers, to which an economical physical filtration process may be applied by controlling the shape of a precipitate when recovering a polymer from waste resins.

### [Background Art]

Recently, since resin materials having physical properties required for various uses and purposes have been developed, the use of polymer materials such as resins or plastics is increasing. In general, resins or plastics use a great amount of energy from crude oil collection to manufacture, and a large amount of carbon is discharged in the process. Furthermore, in the case in which a final product is discarded and resins or plastics included in the product are also discarded, social costs for environmental pollution and the treatment thereof are incurred. Thus, it is essential to recycle waste resins in order to reduce energy consumption, reduce carbon emission, and prevent environmental pollution.

Meanwhile, the waste resin may be a resin of a composite material or a single resin. The resin of a composite material is in a state of two or more resins being blended, and since the single resin contains an additive (such as plasticizers, fillers, flame retardants, stabilizers, filling agents, foaming agents, viscosity reducing agents, colorants, and heat stabilizers) used for importing desired physical properties, it may be difficult to recycle the single resin by a physical method.

Accordingly, methods of recovering a polymer from waste resins by a chemical method and recycling the polymer are being performed. For example, a polymer included in the waste resin is selectively dissolved in a good solvent to obtain a polymer solution, and the good solvent included in the polymer solution is evaporated or the polymer solution is brought into contact with an antisolvent to recrystallize the solution, thereby preparing a recycled polymer.

Since the recycling technology by dissolution and recrystallization recovers a polymer without decomposing the polymer while maintaining the physical properties by increasing the purity of the polymer, it reduces carbon emissions. However, since the good solvent which dissolves the polymer and the antisolvent which precipitates the polymer are mixed, the two used solvents should be separated, respectively, for reusing them later.

Thus, in order to avoid the use of the antisolvent in the recrystallization step, a method of precipitating the polymer by lowering the temperature of the solvent dissolved in the polymer has recently been attracting attention. However, since the polymer precipitated by self-cooling of the polymer solution contains a large amount of the solvent, an additional process for removing the solvent by evaporation is involved, and a great amount of energy is consumed in the process.

In addition, the crystal of the precipitated polymer is mostly in a powder form, and when the polymer precipitated in the powder form is present in a slurry state in a solution, a lot of energy-consuming filtration under reduced pressure is required in a filtration step for solvent separation, and it is difficult to apply simple and economical squeezing or pressing.

### [Disclosure]

### [Technical Problem]

In order to solve the problems mentioned in the Background Art, an object of the present invention is to provide a method for preparing recycled polymers, to which an economical physical filtration process may be applied by controlling the shape of a precipitate when recovering polymers from waste resins.

### [Technical Solution]

In one general aspect, a method for preparing recycled polymers includes: (S1) supplying a mixed solvent including a first solvent of C₃₋₈ alkyl acetate and a second solvent of a non-aromatic cyclic hydrocarbon to a dissolution tank and a precipitation tank, respectively; (S2) supplying a composite resin to the dissolution tank, heating to a dissolution temperature, and dissolving a polymer included in the composite resin while maintaining the dissolution tank at the dissolution temperature to obtain a polymer solution; (S3) supplying the polymer solution to the precipitation tank in which the mixed solvent is maintained at a precipitation temperature and precipitating a polymer included in the polymer solution to obtain a solution including a polymer precipitate having a spherical shape; and (S4) compression-filtering the solution including the polymer precipitate having a spherical shape to obtain a polymer precipitate.

### [Advantageous Effects]

According to the present invention, a mixed solvent including a first solvent of C₃₋₈ alkyl acetate which is favorable for precipitation of a polymer and a second solvent of a non-aromatic cyclic hydrocarbon which has a higher polymer solubility than the first solvent is used as the same solvent supplied to a dissolution tank and a precipitation tank which are for recovering a polymer included in a composite resin derived from waste resins, the mixed solvent is heated to a dissolution temperature which is a temperature at or above the boiling point in the dissolution tank to sufficiently dissolve the polymer, and then rapid crystallization of the polymer dissolved in the precipitation tank maintained at a low temperature is derived to form a spherical precipitate. The solution including the polymer precipitate having a spherical shape may be subjected to physical compression filtration such as squeezing or pressing in a subsequent filtration step and may reduce energy consumption as compared with a conventional filtration under reduced pressure.

In addition, the present invention may reduce energy consumed for lowering the temperature of the polymer solution at a high temperature before adding the polymer solution to the precipitation tank, by separately performing a dissolution step and a recrystallization step of the polymer in the dissolution tank and the precipitation tank, respectively.

Additionally, since the same solvent is supplied to the dissolution tank and the precipitation tank, the solvent remaining after obtaining a final polymer precipitate may be reused directly in the dissolution tank and the precipitation tank, without a separate separation process. Thus, process simplification and cost reduction are achieved, which is favorable from an economic perspective.

### [Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

Hereinafter, the present invention will be described in more detail for better understanding of the present invention.

The method for preparing recycled polymers according to an exemplary embodiment of the present invention may include (S1) supplying the same solvent to a dissolution tank and a precipitation tank; (S2) dissolving a polymer included in a composite resin; (S3) precipitating by recrystallizing the dissolved polymer; and (S4) obtaining a polymer precipitate.

The composite resin used in the present invention is derived from a waste resin and may be obtained by pretreating the waste resin. The waste resin may be recovered from various products molded using a resin or the composition thereof or the use thereof regardless of whether it is hard or soft. In addition, the composite resin obtained by pretreating the waste resin may be a single type of polymer containing an additive, or a resin composition in which two or more polymers are blended. Meanwhile, the pretreatment refers to the whole process of treating the waste resin into a state appropriate for being applied to the method for preparing recycled polymers of the present invention. For example, the pretreatment may be a process of washing the waste resin with a solvent such as water to remove relatively large foreign matter such as dust, drying, and crushing. The crushing is favorably performed so that the dried waste resin has a uniform and consistent size of, for example, 1 mm to 5 cm. When the size of the crushed resin is less than 1 mm, its handling is difficult due to dust production, and when the size is more than 5 cm, it takes a long time to dissolve it in a polymer recovery process.

The composite resin after the pretreatment may include a polymer such as polyethylene, polypropylene, or a mixture thereof, and the polymer may be recovered from the composite resin and used as a recycled resin. The polyethylene is classified into a high-density polyethylene (HDPE), a medium-density polyethylene (MDPE), a low-density polyethylene (LDPE), a linear low-density polyethylene (LLDPE), a ultra-low-density polyethylene (VLDPE), and the like, according to the density, and may be used after being appropriately selected depending on the properties of the composite resin.

For example, the composite resin may include a polymer including polyethylene, polypropylene, or a mixture thereof in an amount of 50 to 90 wt%, based on the weight of the composite resin.

The present invention is intended to selectively recover the polymer included in the composite resin described above to prepare recycled polymers, and the method for preparing recycled polymers according to an exemplary embodiment of the present invention may include, first: (S1) supplying a mixed solvent including a first solvent of C₃₋₈ alkyl acetate and a second solvent of a non-aromatic cyclic hydrocarbon to a dissolution tank and a precipitation tank, respectively.

C₃₋₈ alkyl acetate used as the first solvent may have an ability to dissolve a polymer, but have a better precipitation ability to derive recrystallization of a dissolved polymer. Therefore, when the C₃₋₈ alkyl acetate is used alone as a solvent, it has a low solubility for a polymer such as polyethylene or polypropylene and may not achieve the dissolution of the polymer well, but rather, it is used with the second solvent having a high solubility for the polymer to secure an excellent dissolution ability, thereby having an effect of rapidly precipitating the polymer in a precipitation process after selectively dissolving the polymer from the composite resin.

However, when a solvent other than C₃₋₈ alkyl acetate, for example, a solvent such as alcohol is used as the first solvent, the polymer is not completely dissolved, and the yield of the recycled polymer may be lowered. Since alcohol has a poor solubility for a polymer such as polyethylene or polypropylene and this is not improved even with heating, the solvent for dissolving the polymer is inappropriate for use.

In an exemplary embodiment of the present invention, the first solvent may include one or more selected from n-butyl acetate, t-butyl acetate, isopropyl acetate, pentyl acetate, and n-hexyl acetate. Among them, since n-butyl acetate shows a good solubility for the polymer and has excellent precipitation properties, it may be more favorably used.

Meanwhile, the non-aromatic cyclic hydrocarbon used as the second solvent shows excellent solubility for the polymer and may compensate for lack of solubility of the first solvent described above before the mixed solvent. Therefore, the mixed solvent including the first solvent and the second solvent shows an excellent dissolution ability for the polymer and recrystallizes the dissolved polymer to favorably act in forming a polymer precipitate. The second solvent may have a low solubility for the polymer at a low temperature such as room temperature but may have an increased solubility for the polymer at a temperature near the boiling point of the second solvent. Therefore, in the present invention, the polymer included in the composite resin may be dissolved by maintaining the temperature of the mixed solvent to a temperature close to the boiling point of the second solvent, using the properties as such.

However, when an aromatic solvent is used as the second solvent, since the aromatic solvent has a very good solubility for the polymer, there is no problem in dissolving the polymer, but since the aromatic solvent has a poor recrystallization ability, the polymer may not be completely precipitated in the precipitation process. In addition, since the aromatic solvent has a very high affinity for the polymer, the polymer may be precipitated in a form such as a gel, not particles, and the precipitate in the gel form includes a high content of solvent, more energy may be consumed during drying of the precipitate.

In an exemplary embodiment of the present invention, the second solvent may include one or more selected from methylcyclohexane and cycloalkyl alkyl ether. Among them, the cycloalkyl alkyl ether may be preferably used.

The cycloalkyl alkyl ether has properties such as a relatively high boiling point, a low melting point, a low heat of evaporation, hydrophobicity, and chemical stability. Herein, the boiling point may refer to a boiling point at atmospheric pressure (1 atm). In particular, since the cycloalkyl alkyl ether has a relatively high boiling point, it may be applied to a wide range from a low temperature to a high temperature as a solvent. Therefore, by using the cycloalkyl alkyl ether as the second solvent, a polymer required dissolution may be selectively dissolved in order to prepare recycled polymers from a composite resin derived from waste resins, and the precipitation ability of the mixed solvent with the first solvent may be improved in recrystallizing the dissolved polymer in a subsequent precipitation step.

For example, the cycloalkyl alkyl ether may have a boiling point higher than 100°C, the high boiling point as such may mean that the cycloalkyl alkyl ether has a wide temperature range so that the second solvent is heated to a high temperature to selectively dissolve a target polymer and then the temperature is lowered to perform recrystallization of the dissolved polymer, and using this, the rate at which the polymer precipitate is formed may be improved by increasing supersaturation at a low temperature.

A specific example of the cycloalkyl alkyl ether may include one or more selected from cyclopentyl methyl ether, cyclopentyl ethyl ether, cyclopentyl propyl ether, cyclopentyl isopropyl ether, cyclopentyl t-butyl ether, cyclohexyl methyl ether, cyclohexyl ethyl ether, cyclohexyl propyl ether, cyclohexyl isopropyl ether, and cyclohexyl t-butyl ether. Among them, cyclopentyl methyl ether, cyclopentyl ethyl ether, and cyclohexyl ethyl ether may be favorably used, since they show an excellent solubility at a high temperature and a low affinity at a low temperature for a polymer.

In addition, in an exemplary embodiment of the present invention, the mixed solvent may refer to a solvent in which the first solvent and the second solvent are mixed. In the mixed solvent, the first solvent and the second solvent may maintain each property for dissolution and precipitation of the polymer. Specifically, the first solvent has a poor dissolution ability for the polymer but may have an excellent ability to recrystallize and precipitate the polymer at a low temperature and may maintain the properties in the mixed solvent. In addition, though the second solvent has a poor solubility ability for the polymer at a low temperature, it may have properties of having an improved polymer dissolution ability and may maintain the properties even in the mixed solvent. Therefore, the polymer may be efficiently dissolved and precipitated by creating an environment in which each property of the first solvent and the second solvent may be maximized.

In an exemplary embodiment of the present invention, the mixed solvent may be a mixture of the first solvent and the second solvent at a volume ratio of 2:1 to 5:1, specifically 2:1 to 4:1, and when the mixed solvent satisfying the ratio is supplied to the dissolution tank and the precipitation tank, respectively, a precipitation ability which is dissolving and then recrystallizing the polymer is maximized to improve a recovery rate of the polymer. When the volume ratio of the first solvent and the second solvent is less than 2:1, the precipitation effect caused by the first solvent does not occur, so that the polymer may be precipitated in a powder shape, and when the volume ratio is more than 5:1, the polymer dissolution effect caused by the second solvent is not shown, so that the polymer may not be completely dissolved.

As such, in the present invention, the mixed solvent including the first solvent and the second solvent is supplied to the dissolution tank which performs polymer dissolution and the precipitation tank which performs recrystallization, as the same solvent, and thus, a disadvantage of involving a separation process for later reuse, due to the mixing of two different solvents from the use of a good solvent which dissolves a polymer and an antisolvent which precipitates a polymer in the conventional technology may be overcome.

The method for preparing recycled polymers according to an exemplary embodiment of the present invention may include: (S2) supplying a composite resin to the dissolution tank, heating to a dissolution temperature, and dissolving a polymer included in the composite resin while maintaining the dissolution tank at the dissolution temperature to obtain a polymer solution.

Specifically, the polymer solution may be obtained by bringing the composite resin into contact with the mixed solvent of the first solvent and the second solvent in the dissolution tank to selectively dissolve a target polymer to be recovered, for example, polyethylene, polypropylene, or a mixture thereof.

If necessary, the dissolution step in the dissolution tank may be performed under stirring in order to effectively disperse the composite resin in the mixed solvent and increase resulting dissolution efficiency.

In an exemplary embodiment of the present invention, the dissolution temperature may be a temperature maintained for selectively dissolving the polymer in the dissolution tank. That is to say, (S2) may be supplying the composite resin to the dissolution tank, heating until the temperature of the dissolution tank reaches the dissolution temperature, and dissolving the polymer included in the composite resin while maintaining the dissolution temperature.

Meanwhile, the dissolution temperature may be a temperature corresponding to a "high temperature" at which the solubility of the polymer in the second solvent in the mixed solvent is improved.

Herein, pressurization conditions for maintaining the dissolution temperature may be required in the dissolution tank, and the pressure of the dissolution tank may be atmospheric pressure to 3 bar. When the pressure in the dissolution tank is less than atmospheric pressure, the temperature of the mixed solvent is not sufficiently raised so that the polymer may not be dissolved, and when the pressure is more than 3 bar, excessive energy is consumed for increasing the pressure, but the dissolution efficiency of the polymer is lowered as compared to that, and thus, process efficiency may be deteriorated.

In addition, specifically, the dissolution temperature may be 100 to 150°C. When the dissolution temperature is lower than 100°C, the second solvent does not reach the temperature at which the solubility for the polymer is improved and the polymer may not be sufficiently dissolved. In addition, when the dissolution temperature is higher than 150°C, the second solvent is beyond the point where the solubility for the polymer is maximized, and thus, the dissolution efficiency of the polymer is lowered and excessive energy for increasing the temperature may be consumed.

In addition, the dissolution time in the dissolution tank may be 120 to 300 minutes. The dissolution time may refer to a time from when the composite resin is brought into contact with the mixed solvent in the dissolution tank to when the polymer is dissolved in the mixed solvent. When the dissolution time is less than 120 minutes, the polymer may not be sufficiently dissolved, and when the dissolution time is more than 300 minutes, excessive energy may be consumed for maintaining the dissolution temperature.

The polymer solution obtained in the dissolution tank may satisfy a polymer concentration in a predetermined range, by adjusting the dissolution temperature and the dissolution time. For example, the content of the polymer included in the polymer solution may be 1 wt% or more, 5 wt% or more, or 8 wt% or more and 20 wt% or less, 15 wt% or less, or 13 wt% or less, based on the weight of the polymer solution. When the content of the polymer dissolved in the polymer solution is less than 1 wt%, the amount of the finally prepared recycled polymer may be decreased. When the content of the polymer dissolved in the polymer solution is more than 20 wt%, viscosity is increased, so that it may be difficult to separate the dissolved polymer and an insoluble material.

Further, the polymer solution obtained in the dissolution tank may be subjected to a filtration process in order to remove the insoluble material which is not dissolved in the mixed solvent. The filtration may be performed by one or more of filtration by a filter, filtration by centrifugation, and filtration by settling. As an example, when a filtration method by a filter is performed, the polymer is passed through a filter such as a mesh strainer to separate an insoluble material from the polymer solution, and a filtrate including the dissolved polymer may be used in a subsequent step.

In addition, the method for preparing recycled polymers according to an exemplary embodiment of the present invention may include: (S3) supplying the polymer solution to the precipitation tank in which the mixed solvent is maintained at a precipitation temperature and precipitating a polymer included in the polymer solution to obtain a solution including a polymer precipitate having a spherical shape.

In the present invention, the polymer dissolved in the polymer solution is recrystallized by lowering the temperature of the polymer solution at a high temperature, and in order to minimize energy consumption required for lowering the temperature of the polymer solution, recrystallization and precipitation of the polymer dissolved in the polymer solution are performed at a low temperature, using a separate precipitation tank which is a member other than the dissolution tank maintained at a high temperature.

Specifically, a precipitation step in which the polymer solution at a high temperature is added dropwise while stirring is performed, if necessary, in a state in which the mixed solvent of the first solvent and the second solvent is supplied to the precipitation tank in advance, thereby recrystallizing the polymer dissolved in the polymer solution by a temperature difference to form a precipitate may be performed. Herein, as a difference between the precipitation temperature of the precipitation tank and the dissolution temperature of the dissolution tank applied in the previous step is larger, the precipitation efficiency of the polymer may be increased.

To this end, in the present invention, while the mixed solvent of the first solvent and the second solvent is used in the dissolution tank and the precipitation tank as described above, the temperature of the dissolution tank is heated to a high dissolution temperature in order to maximize the dissolution ability of the mixed solvent, thereby dissolving the polymer in the dissolution tank, and the precipitation temperature is maintained in a low temperature range including room temperature (25°C) to perform precipitation, thereby maximizing the precipitation efficiency of the polymer in the precipitation tank.

In an exemplary embodiment of the present invention, the precipitation temperature is the temperature of the mixed solvent maintained for precipitating the polymer in the precipitation tank, and may be controlled to maintain a temperature lower than the dissolution temperature by 40 to 120°C (that is, the dissolution temperature - (40 to 120°C)), specifically, a temperature lower than the dissolution temperature by 60 to 100°C (that is, the dissolution temperature - (60 to 100°C)). That is, since the upper limit of the temperature of the polymer solution may be determined by the boiling point of the mixed solvent in the dissolution tank, the precipitation temperature may be controlled based on the dissolution temperature of the dissolution tank.

Specifically, the precipitation temperature, which is the temperature of the precipitation tank at which the polymer solution is added dropwise, may be in a range of 5°C to 50°C, 5°C to 30°C, or 10°C to 25°C. When the temperature range is maintained, the temperature of the solvent in the precipitation tank is significantly lower than the temperature of the polymer solution obtained in the dissolution tank, and thus, precipitation by recrystallization of the polymer may be easy. When the precipitation temperature is lower than 5°C, a separate cooling device should be provided for controlling the temperature, and thus, energy usage may be increased. In addition, when the precipitation temperature is higher than 50°C, the precipitation ability of the mixed solvent is decreased to lower the precipitation speed and the precipitation rate of the polymer by recrystallization, resulting in a decrease in efficiency of preparing a final recycled polymer.

In addition, the first solvent of the mixed solvent supplied into the precipitation tank may derive rapid crystallization of a polymer dissolved in the polymer solution to form a spherical precipitate.

The precipitation temperature in the precipitation tank may be a temperature which further improves the precipitation ability of the first solvent having an excellent precipitation ability. In addition, the precipitation temperature is maintained to be relatively low as compared with the dissolution temperature, and this may be a temperature which significantly lowers the solubility for the polymer depending on the properties of the second solvent. The process of forming the precipitate using the properties as such may be adding the polymer solution dropwise to the precipitation tank where the temperature at which the precipitation ability of the first solvent and the second solvent is maximized is maintained to rapidly drop the temperature, in a state in which the polymer solution obtained in the dissolution tank has a maximized dissolution ability for the second solvent depending on the dissolution temperature, thereby deriving the polymer to be recrystallized at a rapid speed and precipitate. In this process, the polymer dissolved in the polymer solution may form a dense crystal at a rapid speed, resulting in forming the polymer precipitate in a spherical shape.

The spherical precipitate may have an average diameter of 500 µm to 5000 µm. When the average diameter of the spherical precipitate is less than 500 µm, a finer filter than a common filter should be used in a subsequent compression filtration process or other filtration methods requiring high energy should be used, and thus, process costs may be increased. In addition, when the spherical precipitate has an average diameter of more than 5000 µm, the size of the precipitate is too large, and thus, the solvent may not be efficiently removed during compression filtration.

When the dissolution and the precipitation of the polymer do not satisfy the conditions described above, the polymer may not be precipitated in the spherical shape, and the polymer may be precipitated, for example, in a powder form. When the polymer is precipitated in the powder form, the crystal of the polymer precipitate is not densely formed, so that the mixed solvent may be included in a large amount in the polymer precipitate, and compression filtration may not be applied in the subsequent filtration step. The compression filtration is a method of filtering a large amount of precipitates in a simple manner with low costs as compared with other filtration methods, and the process costs may be reduced by applying the compression filtration. The process reduction effect may have a greater effect when applied to a process in a large amount.

The solution including the polymer precipitate having a spherical shape may be subjected to physical compression filtration such as squeezing or pressing in a subsequent filtration step and may reduce energy consumption as compared with conventionally used filtration under reduced pressure. Specifically, the compression filtration may be performed by adding the polymer precipitate to a filtration device, compressing the polymer precipitate, and discharging the solvent included in the polymer precipitate. However, since the filtration under reduced pressure is performed by reducing pressure of a container in which the polymer precipitate is placed, a vacuum pressure reducing pump is separately needed, a filter for discharging the solvent during pressure reduction is essentially needed, and thus, the filter may be clogged or should be periodically replaced. Since the compression filtration does not require separate auxiliary equipment in addition to the filtration device and does not have a problem of replacing a part such as a filter, operation is convenient and process costs may be reduced.

In an exemplary embodiment of the present invention, the amount of the mixed solvent in the precipitation tank may be 0.5 times to 10 times, specifically 2 times to 8 times, or 2 times to 6 times the volume of the polymer solution to be precipitated. When the amount of the mixed solvent in the precipitation tank is less than 0.5 times the polymer solution, it may be difficult to sufficiently show the precipitation ability of the solvent for the dissolved polymer, and when the amount is more than 10 times the polymer solution, economic feasibility may be lowered due to the excessive use of the solvent.

Since the polymer precipitate formed in the precipitation tank is present in a state of being mixed with the solvent included in the added polymer solution and the solvent supplied in advance in the precipitation tank, a process of separating the polymer precipitate with the used solvent is needed.

Thus, the solution of the precipitation tank is filtered to separate the solvent in the solution, thereby obtaining the solid polymer precipitate (S4).

As described above, since the solution of the precipitation tank includes the polymer precipitate having a spherical shape, physical compression filtration may be performed in the filtration step.

For example, the compression filtration may be performed by supplying the solution including the polymer precipitate having a spherical shape to a squeezing or pressing filtration device and applying a pressure or 0.1 to 3 MPa or 0.5 to 1.5 MPa, and the polymer precipitate from which the solvent is separated may be obtained therefrom.

Since the compression filtration may separate the polymer precipitate having a spherical shape and the solvent in a liquid state by a simple method using a physical force, energy consumption may be reduced as compared with the filtration under reduced pressure which is applied to the polymer precipitate in a powder shape in the conventional method. In addition, the compression filtration may decrease the amount of the residual solvent contained in the polymer precipitate as compared with the filtration under reduced pressure.

The polymer precipitate obtained by the compression filtration may include polyethylene, polypropylene, or a mixture thereof. In addition, the polymer precipitate may include 19 to 80 wt% or 19 to 37 wt% of a solid content, based on the weight of the polymer precipitate. That is, a residual solvent amount 1 which is a residual solvent amount contained in the polymer precipitate may be 81 to 20 wt% or 81 to 63 wt%, based on the weight of the polymer precipitate. When the polymer precipitate is dried to remove the solvent contained in the polymer precipitate, the recycled polymer may be obtained, and as the residual solvent amount 1 is larger, more energy is consumed for removing the solvent, and thus, process costs may be increased and process efficiency may be reduced.

Further, the filtered polymer precipitate may be commercially used as the recycled polymer after a drying process.

For example, the drying of the polymer precipitate may be performed through heating by hot air or heat conduction, and for example, may be performed using a flow drying device such as a kneader reactor. In the flow drying device, a separate solvent recovery device for recovering a residual solvent removed from the polymer precipitate may be connected, and the polymer precipitate which is dried in the device may be used as the recycled polymer.

The solvent separated by the filtration and the residual solvent recovered by drying the polymer precipitate may be recovered and reused in the dissolution tank and the precipitation tank again. Herein, since the recovered solvent has the same composition as the first used mixed solvent, it may be directly reused without a separate separation process such as fractional distillation. Thus, process simplification and cost reduction may be achieved to secure economic feasibility.

In addition, according to an exemplary embodiment of the present invention, the present invention may include recycled polymers prepared by the method for preparing recycled polymers.

The recycled polymers may be recycled polymers obtained by drying after dissolving and precipitating the composite resin in the mixed solvent of the first solvent and the second solvent according to the method of preparing a recycled polymer. The mixed solvent may be completely removed from the recycled polymer, after a drying process of the polymer precipitate obtained in the precipitation process. However, the mixed solvent may remain in a small amount in the recycled polymer according to the drying conditions such as drying temperature, drying time, and drying method. The residual amount as such may be at a level which does not affect the use of the recycled polymer as a product and may be a degree to which it is difficult to detect the mixed solvent by a common detection method, depending on the content. However, when the mixed solvent is detected, it is recognized that the mixed solvent is used in the process of preparing the recycled polymer.

The first solvent and the second solvent may be detected, respectively, from the amount of the mixed solvent remaining in the recycled polymer. The amount of the first solvent remaining in the recycled polymer may be expressed as a residual solvent amount 2-1, and the amount of the second solvent remaining in the recycled polymer may be expressed as a residual solvent amount 2-2. The residual solvent amount 2-1 may not be detected (0 ppm), or if detected, may be 10 ppm to 3000 ppm or 10 ppm to 100 ppm, based on the weight of the recycled polymer. In addition, the residual solvent amount 2-2 may not be detected (0 ppm), or if detected, may be 10 ppm to 3000 ppm or 10 ppm to 1500 ppm, based on the weight of the recycled polymer. The residual solvent amounts 2-1 and 2-2 of 0 ppm may mean that the first solvent or the second solvent does not exist. It is preferred that the residual solvent amount 2-1 and the residual solvent amount 2-2 are close to 0 ppm, and when they are more than 3000 ppm, the physical properties and the processability of the recovered recycled polymer may be deteriorated.

The mixed solvent remaining in the recycled polymer is the solvent used in the method of preparing the recycled polymer and may include the first solvent of C₃₋₈ alkyl acetate and the second solvent of the non-aromatic cyclic hydrocarbon. Specifically, the first solvent of the mixed solvent remaining in the recycled polymer may be one or more selected from n-butyl acetate, t-butyl acetate, isopropyl acetate, pentyl acetate, and n-hexyl acetate. In addition, specifically, the second solvent of the mixed solvent remaining in the recycled polymer may be one or more selected from methylcyclohexane and cycloalkyl alkyl ether. More specifically, the cycloalkyl alkyl ether among the second solvent may include one or more selected from cyclopentyl methyl ether, cyclopentyl ethyl ether, cyclopentyl propyl ether, cyclopentyl isopropyl ether, cyclopentyl t-butyl ether, cyclohexyl methyl ether, cyclohexyl ethyl ether, cyclohexyl propyl ether, cyclohexyl isopropyl ether, and cyclohexyl t-butyl ether.

Hereinafter, the present invention will be described in more detail by the examples. However, the following examples are provided for illustrating the present invention, and it is apparent to a person skilled in the art that various modifications and alterations may be made without departing from the scope and spirit of the present invention, and the scope of the present invention is not limited thereto.

### Example 1:

A mixed solvent in which n-butyl acetate (n-BuAc) as a first solvent and methyl cyclohexane (MCH) as a second solvent were mixed at a volume ratio of 2:1 was prepared. 75 ml of the mixed solvent was supplied to a dissolution tank, and 225 ml of the mixed solvent was supplied to a precipitation tank.

A composite resin sample (6.45 g) including 77.89 wt% of polyethylene was supplied to the dissolution tank, and the dissolution tank was heated to 125°C at which the mixed solvent boiled to obtain a polymer solution (solubility: 6.7 wt%) in which polyethylene included in the composite resin was dissolved. The dissolution was performed for 180 minutes under stirring.

The polymer solution was filtered through a mesh strainer to separate an insoluble material, and stirring was performed while the polymer solution was added dropwise to the precipitation tank (mixed solvent: 225 ml) at room temperature (25°C) at an addition amount of 5 ml/min. The addition amount of the polymer solution was adjusted so that the amount of the mixed solvent was 4 times the volume of the added polymer solution in the precipitation tank. The polymer solution at a high temperature (125°C) was recrystallized by the temperature difference to form a spherical precipitate in the precipitation tank.

The solution of the precipitation tank was supplied to a press filtration device and compression filtration was performed with a pressure of 1 MPa to obtain a polyethylene precipitate, and the mixed solvent used in dissolution and precipitation was separated. The polyethylene precipitate was added to a kneader reactor and dried at 120°C to separate a residual solvent, and the dried polyethylene precipitate was used as a recycled polymer. Meanwhile, the solvents separated from the compression filtration and the kneader reactor were recovered and reused.

### Reference Examples 1-1 and 1-2:

The process was performed in the same manner as in Example 1, except that the temperature of the precipitation tank and the filtration method were changed as shown in the following Table 1.

### Example 2 and Reference Example 2:

The process was performed in the same manner as in Example 1, except that the mixing ratio of the first solvent and the second solvent, the conditions of the dissolution tank and the precipitation tank, or the filtration method was changed as shown in the following Table 1.

### Examples 3 to 5 and Reference Examples 3 and 4:

The process was performed in the same manner as in Example 1, except that n-butyl acetate (n-BuAc) as the first solvent and cyclopentyl methyl ether (CPME) as the second solvent were used, and the mixing ratio of the two solvents, the conditions of the dissolution tank and the precipitation tank, or the filtration method was changed as shown in the following Table 1.

### Comparative Examples 1 to 8:

The process was performed in the same manner as in Example 1, except that the solvent supplied to the dissolution tank and the precipitation tank was replaced with a single solvent of methyl cyclohexane (MCH) or cyclopentyl methyl ether (CPME) (Comparative Examples 1 to 5), or butanol was replaced with a mixed solvent with methylcyclohexane or cyclopentyl methyl ether (Comparative Examples 6 to 8), and the conditions of the dissolution tank and the precipitation tank and the filtration method were changed as shown in the following Table 1.

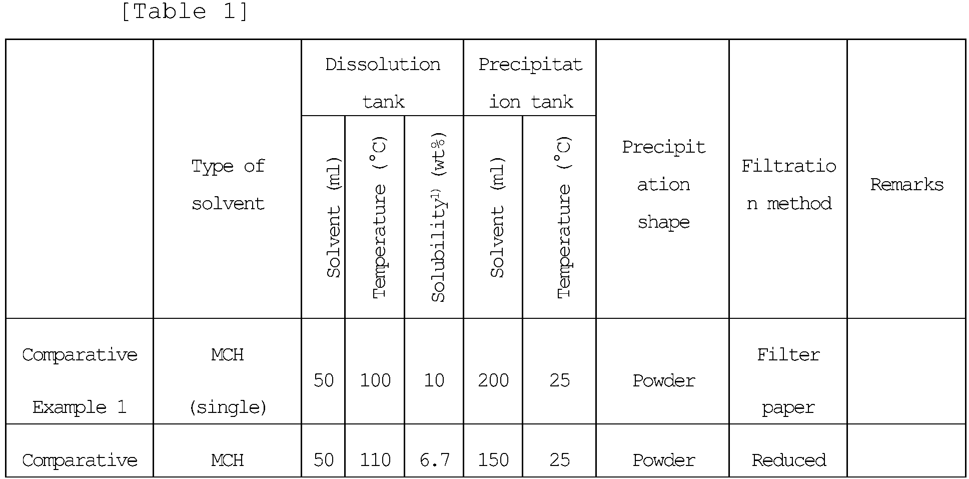

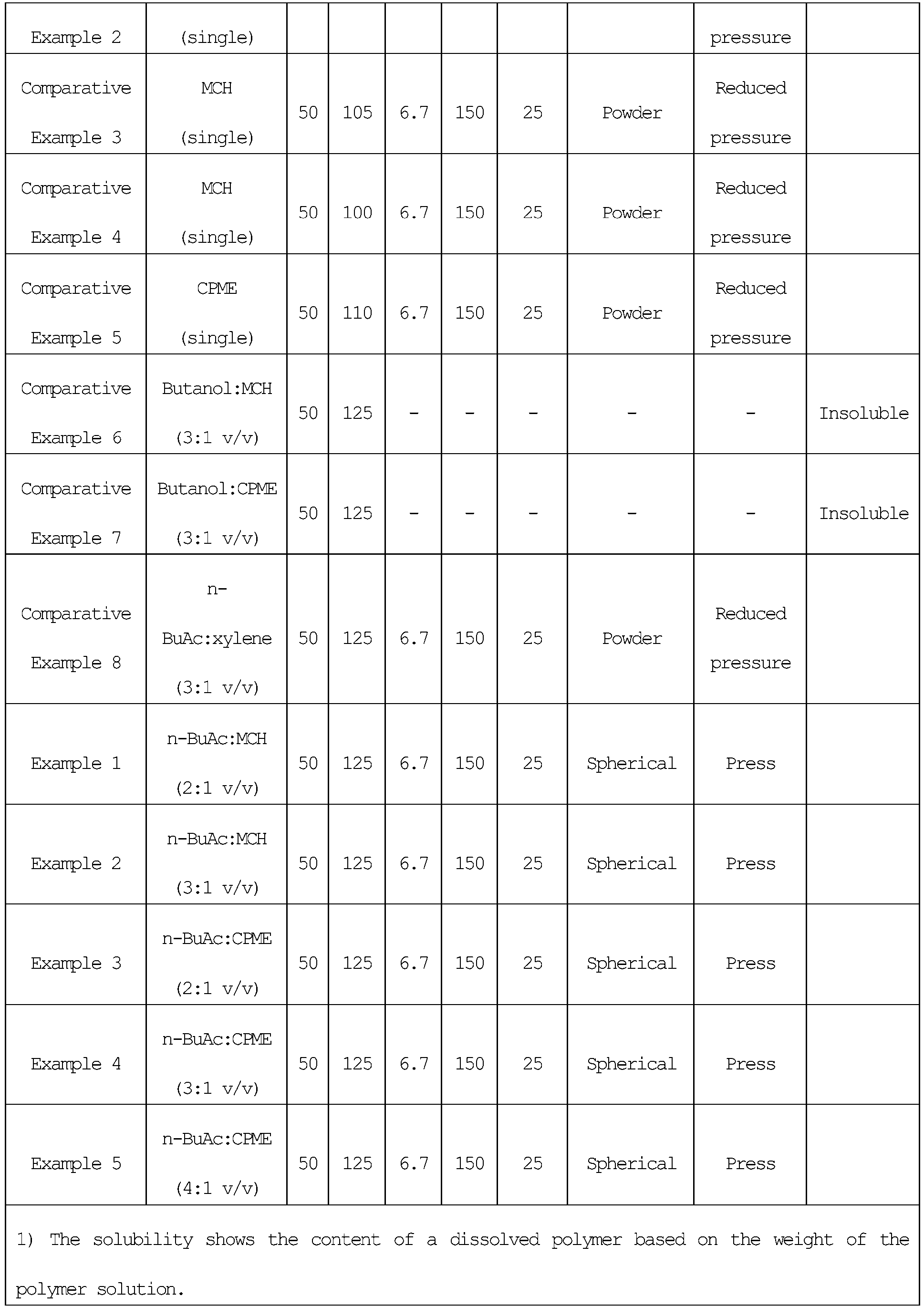

In Table 1, in the examples, the mixed solvent of the first solvent (n-BuAc) and the second solvent (MCH or CPME) was used in each of the dissolution tank and the precipitation tank, the mixing solvent was heated to the boiling point in the dissolution tank to sufficiently dissolve the polymer, and then rapid crystallization of the polymer dissolved by the effect of the first solvent was derived in the precipitation tank maintained at a lower temperature than the dissolution tank, thereby forming a spherical precipitate, and the solution including the polymer precipitate having a spherical shape was compression-filtered in a press filtration device.

However, in Comparative Examples 1 to 5 using a single solvent, the same solubility as the solubility of the examples was shown, but the rapid crystallization as in the Examples was not achieved in the precipitation tank, so that the polymer precipitate was formed in the powder shape, not the spherical shape, and the polymer precipitate was filtered under reduced pressure to obtain recycled polymers. When the polymer precipitate in the powder shape was filtered using the press filtration device in Comparative Examples 1 to 5, the particles in the powder shape were too small, so that the particles were passed through the filter of the filtration device with the solvent and the filtration was not properly performed.

In Comparative Examples 6 to 8, the experiment was performed using a mixed solvent having a different configuration from the mixed solvent of the present invention. In Comparative Examples 6 and 7, cycloalkyl alkyl ether was used as the second solvent, but butanol instead of C₃₋₈ alkyl acetate was used as the first solvent, and since the polymer was not sufficiently dissolved in the dissolution tank, further experimentation was not able to proceed. In Comparative Example 8, C₃₋₈ alkyl acetate was used as the first solvent, xylene which is the aromatic cyclic hydrocarbon was used as the second solvent, and the polymer was sufficiently dissolved in the dissolution tank, but the dissolution ability of xylene was excessive, so that the precipitation did not occur well. In addition, in Comparative Example 8, the precipitate was precipitated in a powder form, and press filtration was not able to proceed, like Comparative Examples 1 to 5.

This shows that the polymer was formed in the spherical shape by the dissolution and the precipitation of the polymer by the first solvent and the second in the present invention, thereby allowing the use of compression filtration which may further reduce process costs, and the efficiency of the process of preparing the recycled polymer may be increased.

The following Table 2 shows that in the examples and the reference examples, the shape of the polymer precipitate was formed to be spherical, but when the filtration method was changed, the yield of the recycled polymer may be changed.

**[Table 2]**

| | Type of solvent | Precipitation shape | Filtration method | TSC²⁾ (wt%) |
|---|---|---|---|---|
| Example 1 | n--BuAc:MCH (2:1 v/v) | Spherical | Press | 19.2 |
| Reference Example 1-1 | n--BuAc:MCH (2:1 v/v) | Spherical | Reduced pressure | 11.8 |
| Reference Example 1-2 | n--BuAc:MCH (2:1 v/v) | Spherical | Reduced pressure | 9.8 |
| Example 2 | n-BuAc:MCH (3:1 v/v) | Spherical | Press | 28.8 |
| Reference Example 2 | n-BuAc:MCH (3:1 v/v) | Spherical | Reduced pressure | 13.2 |
| Example 3 | n-BuAc:CPME (2:1 v/v) | Spherical | Press | 32.4 |
| Reference Example 3 | n-BuAc:CPME (2:1 v/v) | Spherical | Reduced pressure | 9.0 |
| Example 4 | n-BuAc:CPME (3:1 v/v) | Spherical | Press | 28.0 |
| Reference | n-BuAc:CPME | Spherical | Reduced | 11.6 |
| Example 4 | (3:1 v/v) | | pressure | |
| Example 5 | n-BuAc:CPME (4:1 v/v) | Spherical | Press | 36.5 |
| 2) Total solid content (TSC) shows a solid content of a polymer precipitate after filtration. | | | | |

Referring to Table 2, the shape of the polymer precipitate formed in the examples and the reference examples was identically spherical, but when the filtration was performed using press filtration in the examples, it was confirmed that the yield of the recycled polymer was increased. This shows that when the polymer precipitate having a spherical shape was filtered under reduced pressure, the mixed solvent was not able to be sufficiently removed in the spherical shape having relatively large particles. This shows that for the properties of the spherical shape as such, it is rather more preferred to perform compression filtration such as press filtration which consumes relatively less energy in the method for preparing recycled polymers according to the present invention, the yield of the recycled polymer may be improved therefrom, and thus, it is more efficient and economical than a conventional process.

Next, the polymer precipitates obtained in Examples 1 to 5 were dried in a vacuum oven at 100°C for 12 hours to obtain the recycled polymers.

The amount of the solvent in the recycled polymer was measured using liquid chromatography (LC) equipment, and the measured second residual solvent amount is shown in Table 3.

**[Table 3]**

| Classification | Residual solvent amount 2 (ppm) | |
|---|---|---|
| | First solvent | Second solvent |
| Example 1 | BuOAc, 100 | MCH, 300 |
| Example 2 | BuOAc, 100 | MCH, 200 |
| Example 3 | BuOAc, 80 | CPME, 1300 |
| Example 4 | BuOAc, 70 | CPME, 1500 |
| Example 5 | BuOAc, 70 | CPME, 160 |

In Table 2, the residual amount (ppm) in Example 1 to 4 is the second residual solvent amount of the recycled polymer obtained in each example shown as parts per million (ppm) to the weight of the recycled polymer.

Referring to Table 3, in the recycled polymer, the first solvent was about 70 ppm to 100 ppm and the second solvent was 160 ppm to 1300 ppm, and it was confirmed that both solvents remained only in a very small amount. The numerical value as such is a value which does not affect the physical properties or processability at all in using the recycled polymer. However, since the solvent used for preparing the recycled polymer was detected, it may be used as an indicator to determine what solvent was used for the preparation of the recycled polymer.

## Claims

1. A method for preparing recycled polymers, the method comprising:
(S1) supplying a mixed solvent including a first solvent of C₃₋₈ alkyl acetate and a second solvent of a non-aromatic cyclic hydrocarbon to a dissolution tank and a precipitation tank, respectively;
(S2) supplying a composite resin to the dissolution tank, heating to a dissolution temperature, and dissolving a polymer included in the composite resin while maintaining the dissolution tank at the dissolution temperature to obtain a polymer solution;
(S3) supplying the polymer solution to the precipitation tank in which the mixed solvent is maintained at a precipitation temperature and precipitating the polymer included in the polymer solution to obtain a solution including a polymer precipitate having a spherical shape; and
(S4) compression-filtering the solution including the polymer precipitate having a spherical shape to obtain a polymer precipitate.

2. The method for preparing the recycled polymers of claim 1,
wherein the first solvent includes one or more selected from n-butyl acetate, t-butyl acetate, isopropyl acetate, pentyl acetate, and n-hexyl acetate, and
the second solvent includes one or more selected from methylcyclohexane and cycloalkyl alkyl ether.

3. The method for preparing the recycled polymers of claim 3, wherein the cycloalkyl alkyl ethers includes one or more selected from cyclopentyl methyl ether, cyclopentyl ethyl ether, cyclopentyl propyl ether, cyclopentyl isopropyl ether, cyclopentyl t-butyl ether, cyclohexyl methyl ether, cyclohexyl ethyl ether, cyclohexyl propyl ether, cyclohexyl isopropyl ether, and cyclohexyl t-butyl ether.

4. The method for preparing the recycled polymers of claim 1, wherein the first solvent and the second solvent are mixed at a volume ratio of 2:1 to 5:1.

5. The method for preparing the recycled polymers of claim 1, wherein the dissolution temperature is 100 to 140°C.

6. The method for preparing the recycled polymers of claim 1, wherein the polymer solution includes 1 to 20 wt% of the polymer based on the weight of the polymer solution.

7. The method for preparing the recycled polymers of claim 1, wherein the precipitation temperature is lower than the dissolution temperature by 40 to 120°C.

8. The method for preparing the recycled polymers of claim 1, wherein the precipitation temperature is 5 to 50°C.

9. The method for preparing the recycled polymers of claim 1, wherein a volume of the mixed solvent supplied to the precipitation tank is 0.5 times to 10 times a volume of the polymer solution.

10. The method for preparing the recycled polymers of claim 1, wherein the compression-filtering is performed by squeezing or pressing.

11. The method for preparing the recycled polymers of claim 1, wherein the polymer precipitate includes a polymer selected from polyethylene, polypropylene, or a mixture thereof.

12. The method for preparing the recycled polymers of claim 1, wherein the polymer precipitate has an average diameter of 500 µm to 5000 µm.

13. Recycled polymers comprising residual components,
Wherein the residual components comprises C₃₋₈ alkyl acetate andone or more selected from methylcyclohexane and cycloalkyl alkyl ether.

14. The recycled polymers of claim 13,
wherein the C₃₋₈ alkyl acetate is one or more selected from n-butyl acetate, t-butyl acetate, isopropyl acetate, pentyl acetate, and n-hexyl acetate, and
the cycloalkyl alkyl ether is one or more selected from cyclopentyl methyl ether, cyclopentyl ethyl ether, cyclopentyl propyl ether, cyclopentyl isopropyl ether, cyclopentyl t-butyl ether, cyclohexyl methyl ether, cyclohexyl ethyl ether, cyclohexyl propyl ether, cyclohexyl isopropyl ether, and cyclohexyl t-butyl ether.

15. The recycled polymers of claim 13,
wherein the C₃₋₈ alkyl acetate is included at 10 ppm to 3000 ppm, and
one or more selected from the methylcyclohexane and the cycloalkyl alkyl ether are included at 10 ppm to 3000 ppm.
